Europäisches Patentamt

**European Patent Office** (11) Numéro de publication: **0 017 603**

Office européen des brevets **A1**

(19)

(12) **DEMANDE DE BREVET EUROPEEN**

(21) Numéro de dépôt: **80420039.2**

(22) Date de dépôt: **27.03.80**

(51) Int. Cl.³: **B 63 B 5/24**
**A 63 C 15/00**

(30) Priorité: **04.04.79 FR 7909106**

(43) Date de publication de la demande:
**15.10.80 Bulletin 80/21**

(84) Etats Contractants Désignés:
**AT BE CH DE GB IT**

(71) Demandeur: **Olivo, Jean**
**Le Clos Grangette**
**F-42230 Roche-La-Molière(FR)**

(72) Inventeur: **Olivo, Jean**
**Le Clos Grangette**
**F-42230 Roche-La-Molière(FR)**

(74) Mandataire: **Perrier, Jean-Pierre et al,**
**Cabinet GERMAIN & MAUREAU Le Britannia 20,**
**Boulevard E. Déruelle**
**F-69003 Lyon(FR)**

(54) **Coque stratifiée, en particulier pour planche à voile, procédé de fabrication et moule pour sa mise en oeuvre.**

㊳ Cette coque est du type composé de deux éléments, respectivement supérieur (3) et inférieur (2), réalisés séparément en résine thermodurcissable armée, liés l'un à l'autre par collage de leurs bords et formant une cavité garnie par de la résine expansée.

Pour faciliter la fabrication de cette coque, réduire son coût, augmenter sa résistance et éviter toute blessure à l'utilisateur, son élément principal présente, en section transversale, la forme d'un C couché dont les deux retours (2b) disposés au-dessus au dos du C constituant la paroi inférieure transversale de la coque, sont sensiblement dans le prolongement l'un de l'autre et sont solidaires des arrondis (2c) formant à eux seuls les flancs de la coque. L'autre élément (3) a la forme d'un panneau obturant l'ouverture (4) de l'élément principal, ouverture au bord de laquelle il est lié.

Fig. 1

1

**Coque stratifiée,en particulier pour planche à voile,procédé de fabrication et moule pour sa mise en oeuvre.**

Bien que visant plus particulièrement les coques de planche à voile,l'invention concerne également les coques de tout flotteur ou similaires.

Traditionnellement,ce type de coque est constitué par deux éléments en résine armée,respectivement supérieur et inférieur,qui sont assemblés suivant un plan de joint sensiblement horizontal et disposé sensiblement au milieu de la hauteur de la coque.Après assemblage,la coque est garnie par un matériau de remplissage tel que de la mousse de polyuréthane expansée à cellules fermées.

Bien que fort répandu,ce type de coque présente des inconvénients lors de sa fabrication et lors de son utilisation.

En effet,en prévision de sa liaison avec l'autre élément,chaque élément doit comporter dans sa zone d'assemblage une languette périphérique.La plupart du temps,cette languette fait saillie à l'extérieur de l'élément de coque et nécessite d'être découpée,ce qui conduit à une perte de temps.Elle doit aussi être poncée sur ses deux faces pour retirer toute trace des agents de démoulage.Sa face extérieure reçoit une colle de liaison avec un bourrelet protecteur périphérique en caoutchouc ou matière similaire. Par ailleurs,la liaison proprement dite des languettes des deux éléments est assurée par une colle qui doit être répartie sur toute la longueur des faces en vis-à-vis des languettes.Ces diverses opérations manuelles nécessitent du temps,des produits onéreux et conduisent à un alourdissement de la coque.

Lorsque les languettes de liaison sont orientées vers l'intérieur de chaque élément de coque,aux inconvénients ci-dessus s'ajoutent ceux provenant des difficultés à assurer et contrôler la répartition de la colle entre les deux éléments superposés.Enfin,en prévision de l'expansion de la résine synthétique,expansion s'effectuant dans l'enceinte close constituée par les deux éléments précédemment

2

assemblés,il est nécessaire de maintenir ces éléments dans un moule très rigide qui est onéreux et ne peut être réutilisé,qu'après polymérisation de la résine expansée.De ce fait,il est nécessaire de multiplier ces moules pour assurer une production industrielle,même par petites séries.Cela intervient sensiblement sur le coût de la production de la coque.

En utilisation,et malgré les soins apportés à la fabrication,il peut arriver,à la suite d'un choc sur la zone d'assemblage,que les deux languettes se séparent et délimitent une fissure préjudiciable à la rigidité de la structure.De plus,lorsque les languettes périphériques font saillie à l'extérieur,et bien que cette saillie forme une proéminence ayant seulement quelques millimètres, cette dernière s'avère gênante,et voire même,dangereuse pour l'utilisateur lorsqu'il remonte sur la planche après en avoir été éjecté.En effet,dans ces conditions,cette saillie vient en contact avec le corps de l'utilisateur et le racle lorsqu'il se hisse sur la planche.Quand la proéminence n'est pas protégée par un bourrelet en caoutchouc, les extrémités apparentes des fibres de verre constituant l'armature de la coque peuvent venir en contact avec la peau de l'utilisateur et le blesser superficiellement.

La présente invention a pour but de fournir une coque de planche à voile qui soit de réalisation simple,peu onéreuse et qui n'entraine aucune gêne lors de son utilisation.

A cet effet,l'élément principal de cette coque présente,en section transversale,la forme générale d'un C couché dont les deux retours,disposés au-dessus du dos du C constituant une des parois transversales de la coque, sont sensiblement dans le prolongement l'un de l'autre , forment à eux seuls les flancs de la coque et délimitent une ouverture,tandis que l'autre élément,affectant la forme d'un panneau,obture l'ouverture de l'élément principal au bord de laquelle il est lié.

Grâce à sa forme et à sa structure,la coque présente

3

des flancs parfaitement lisses,sans excroissance dangereuse ou gênante pour l'utilisateur.En outre,la disposition
de la zone d'assemblage hors de la zone des flancs protège celle-ci des chocs,supprime tout risque de décollage
des éléments et permet,lorsqu'elle est à la partie supérieure de la coque,de donner à l'élément inférieur de
celle-ci une rigidité propre bien supérieure à celle des
éléments inférieurs des coques traditionnelles.

De plus,les opérations de reprise nécessaires pour assembler les deux éléments de coque sont considérablement
simplifiées et réduites en durée,puisqu'il n'est pas nécessaire de poncer et d'enduire de colle chacune des faces
des languettes .Ainsi,est également réduite l'incidence
de ces opérations sur le prix de revient et sur le poids
des matières utilisées.Ce dernier point est important,
puisqu'il permet,pour un coût moindre,d'obtenir une coque
plus légère et plus performante qu'une coque de dimensions égales fabriquée suivant le procédé traditionnel.

L'invention vise également le procédé de fabrication
de cette coque.

Dans ce procédé,du type de ceux consistant à réaliser
au moins un élément par dépôt d'un complexe fibres de
verre-résine dans un moule,et après polymérisation de la
résine armée,à injecter dans l'élément une résine synthétique mélangée à un agent porofore .

Ce mode de fabrication permet de réaliser des moules
bien moins onéreux que les conformateurs nécessairement
plus résistants pour résister à la pression d'expansion,
et de multiplier le nombre de ces moules sans trop grande
incidence financière si les besoins de la production le
demandent.

Par ailleurs,la rigidité,qui est donnée à l'élément
principal par les retours de son profil en C formant nervure latérale,permet,non seulement de transporter cet élément lors de sa fabrication,mais aussi de le démouler
du conformateur avant polymérisation complète de la résine expansée pour réutiliser immédiatement ce conformateur.

4

La rigidité de l'élément augmente donc la fréquence d'utilisation du conformateur et réduit aussi le nombre de conformateurs nécessaires pour fabriquer les coques en séries.

L'invention vise aussi le moule pour la mise en oeuvre de ce procédé.

A cet effet,les plans de joints de ses parties sont ménagés hors des zones correspondant aux flancs de la coque et chacune de ses parties,réalisée en résine armée, comporte sur ses bords,des nervures de rigidification munies de moyens de positionnement,coopérant avec ceux complémentaires de la nervure de la partie juxtaposée,et des passages transversaux pour des organes amovibles assurant la liaison des deux parties,les nervures des parties délimitant l'ouverture étant elles-mêmes renforcées par coudage vers l'extérieur.

Ce moule,qui est très léger,facilement maniable ,et peut être réalisé en grandes séries,est suffisamment rigide pour constituer également conformateur dans la phase d'expansion de la résine dans la coque.Il contribue ainsi à réduire les frais de fabrication.

L'invention sera mieux comprise à l'aide de la description qui suit,en référence au dessin schématique annexé,représentant à titre d'exemple une forme d'exécution de la coque selon l'invention.

Figure 1 est une vue en section transversale de cette coque,

Figures 2 et 3 sont des vues partielles montrant à échelle agrandie deux formes d'exécution des moyens de liaison des deux éléments de coque,

Figure 4 est une vue représentant en section transversale une forme d'exécution du moule utilisé pour fabriquer l'élément principal de la coque de figures 1 et 2,

Figure 5 est une vue partielle de côté et en coupe transversale montrant,à échelle agrandie,la structure de la nervure inférieure de l'une des parties du moule,

Figures 6 et 7 sont des vues de côté,en coupe transversale,montrant deux des phases de fabrication de la coque,

Figure 8 est une vue en section transversale montrant une autre forme d'exécution du moule pour réaliser l'élément principal de la coque de figure 1,

Figure 9 est une vue en section transversale d'une autre forme de coque,

Figure 10 est une vue en section transversale d'une forme d'exécution du moule pour réaliser l'élément principal de la coque de figure 9.

De façon connue,la coque est constituée par un élément inférieur 2 et par un élément supérieur 3 assemblés notamment par collage.

Selon l'invention,l'élément inférieur 2,constituant élément principal,présente,en section transversale,la forme d'un C. Le dos 2a de ce C constitue le fond de la coque,tandis que les retours 2b,disposés au-dessus de ce fond et dans le prolongement l'un de l'autre,constituent la partie supérieure de la coque.Ces deux retours délimitent une ouverture,désignée de façon générale par 4,et destinée à être obturée par l'élément supérieur 3 en forme de panneau.Les retours sont reliés au fond par des flancs cintrés 2a formant nervures de rigidification.

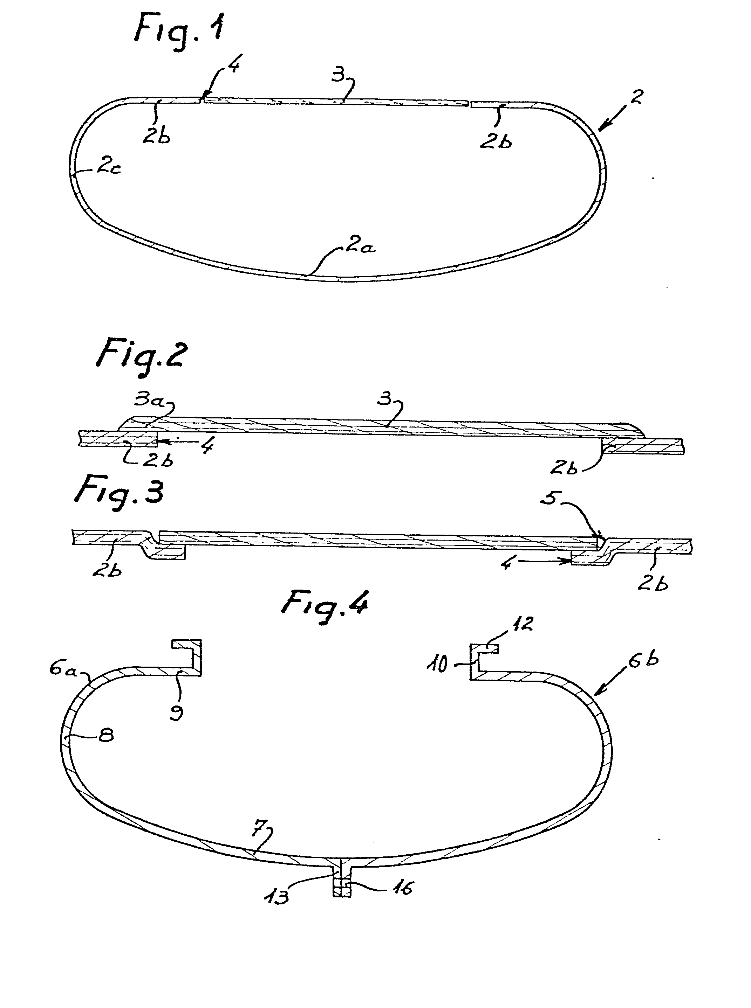

Le panneau 3 peut être disposé à couvre-joint,comme montré à la figure 2,cas dans lequel,en raison de ses dimensions supérieures à celles de l'ouverture 4,ses bords 3a recouvrent les bords des retours 2b.Il est à noter que les bords 3a du panneau 3 sont bombés de manière à ne pas former d'arêtes susceptibles de blesser l'utilisateur.

Comme montré à la figure 3,les bords 3a du panneau 3 peuvent également être disposés dans une feuillure 5,ménagée sur le bord de l'ouverture 4,et formant une dépression à l'intérieur de l'élément principal 2.

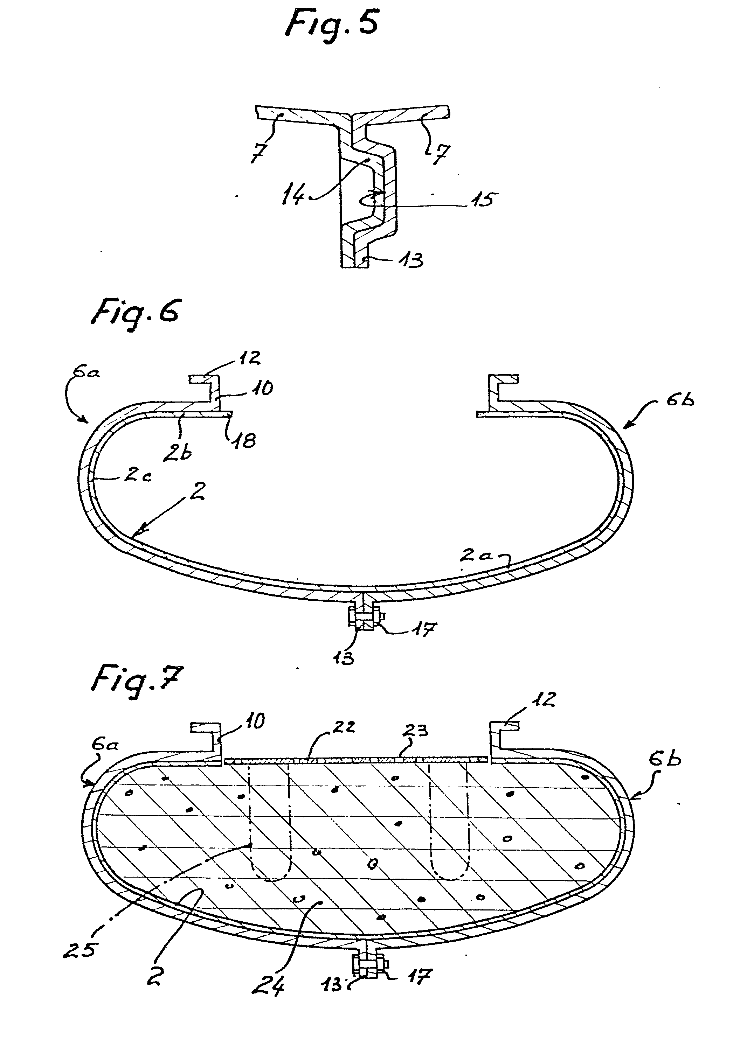

Cet élément principal 2 est réalisé au moyen d'un moule qui,dans la forme d'exécution représentée aux figures 4 et 5,est composé de deux parties 6a et 6b. Chacune de ces parties est elle-même réalisée en résine armée et affecte la forme d'un demi C.Plus précisément,chaque par-

6

tie comporte un fond 7,un flanc 8 et un retour supérieur 9 assurant le moulage des parties correspondantes 2a,2c et 2b de l'élément inférieur 2 de la coque.Le retour 9 de la partie de moule comporte,sur son bord,une nervure verticale de rigidification 10,coudée horizontalement vers l'extérieur en 12. Le fond 7 de chaque partie de moule est également muni d'une nervure verticale de rigidification 13. Cette nervure 13 est munie de moyens de positionnement aptes à coopérer avec les moyens complémentaires de la nervure 13 de l'autre partie du moule et des passages pour des organes amovibles de liaison de ces deux parties.Dans la forme d'exécution représentée à la figure 5,les moyens de positionnement sont constitués par des bossages 14,saillant en direction de la nervure de l'autre élément,et par des cavités 15 aptes à recevoir les bossages 14 de la nervure de l'autre élément.Ces bossages qui,dans la forme représentée,sont pyramidaux,peuvent présenter une toute autre forme .La figure 4 montre que la nervure 13 est également traversée par des ouvertures 16 permettant le passage d'organes de liaison tels que des boulons 17,comme montré à la figure 6.

Il est à remarquer que,grâce à leur réalisation en résine armée,les deux parties du moule,déjà rigides individuellement,forment,assemblées,un ensemble très rigide.Par ailleurs,de réalisation peu onéreuse,elles peuvent être reproduites aisément en fonction des nécessités de la production.

Pour fabriquer une coque au moyen de ce moule,il suffit,lorsque les deux parties 6a et 6b de ce moule ont été assemblées,de déposer dans celui-ci plusieurs couches de nappes de fibres de verre alternées avec des couches de résine synthétique thermodurcissable.Immédiatement après cette opération,les bords 18 du complexe verre-résine dépassant des nervures 10 sont aisément sectionnés au moyen d'une lame tranchante déplacée le long de cette nervure 10. Après polymérisation de la résine du complexe, les deux parties du moule sont désolidarisées,de manière à

7

permettre le démoulage de l'élément principal 2.Celui-ci présente,grâce à ses deux flancs 2c,une bonne rigidité qui permet de le stocker sans risque de déformations jusqu'à utilisation ultérieure,ce qui n'est pas toujours le cas pour les éléments inférieurs des coques traditionnelles.

Le panneau supérieur 3 est réalisé de façon traditionnelle dans un moule de type connu.

Dans la phase suivante de ce procédé de fabrication, l'élément 2 est mis en place dans un conformateur qui est constitué par le moule en deux parties 6a-6b,ou par un élément très similaire par sa forme et sa structure.L'ouverture 4 est alors obturée par une plaque 22 de dégazage et de limitation de l'expansion.Cette plaque porte des perforations 23 .Une résine de remplissage 24 est introduite avec un agent porophore par l'une des ouvertures 23 de la plaque 22.

De façon connue,sous l'effet de l'agent porophore,la résine est soumise à une expansion au cours de laquelle elle chasse tout le gaz contenu dans la coque à travers les ouvertures 23 de la plaque 22.En d'autres termes, l'expansion de la résine est dite "libre",alors que dans les procédés de fabrication traditionnels,elle s'effectue dans l'enceinte close formée par la réunion des deux éléments de la coque.L'obtention d'une expansion libre permise par l'ouverture 4 de l'élément principal est très intéressante,car elle diminue considérablement les contraintes sur l'élément 2 et permet d'avoir recours à un conformateur beaucoup moins robuste et moins onéreux que celui qui est nécessaire lorsque l'expansion s'effectue dans une enceinte close. Dans cet exemple de mise en oeuvre,le conformateur a exactement la même forme et structure que celles du moule utilisé pour réaliser l'élément 2. Grâce à cela,les moules peuvent constituer conformateur.En outre,en raison de leur faible coût,et de leur facilité de production,ces moules conformateurs peuvent être multipliés si l'importance de leur série l'exige.

8

Immédiatement après l'expansion,la plaque 22 est retirée.L'élément 2,avec son garnissage 24,peut être laissé dans le moule jusqu'à ce que ce garnissage soit polymérisé, comme dans la méthode traditionnelle,mais il peut aussi être démonté.Ce démontage permettant d'augmenter la fréquence d'utilisation des conformateurs et,en conséquence, de réduire les investissements nécessaires à cette fabrication,est rendu possible par la rigidification naturelle de l'élément 2 qui l'empêche de se déformer et de détériorer le garnissage pendant les manipulations nécessaires au démoulage.L'obtention d'une expansion à l'air libre permet également de contrôler,après expansion et polymérisation,la qualité de la résine expansée et le bon remplissage de la cavité interne de l'élément 2,mais aussi, et si besoin est,de limiter ce remplissage,par exemple en fixant dans la plaque 22 des noyaux 25,rigides ou gonflables,représentés en traits mixtes à la figure 7.Cette limitation du volume garni est intéressante au niveau du coût de la matière utilisée,mais aussi au niveau de la légereté et des caractéristiques de la coque.

A ce stade,pour terminer la coque,il suffit de rapporter sur l'élément inférieur 2 le panneau supérieur 3.

Il ressort de ce qui précède que cette coque,de même que son procédé de fabrication et son moule,permettent d'obtenir une coque très résistante,plus légère et moins onéreuse que celles traditionnelles,tout en n'engendrant aucune gêne pour l'utilisateur,grâce à l'absence de proéminences latérales.

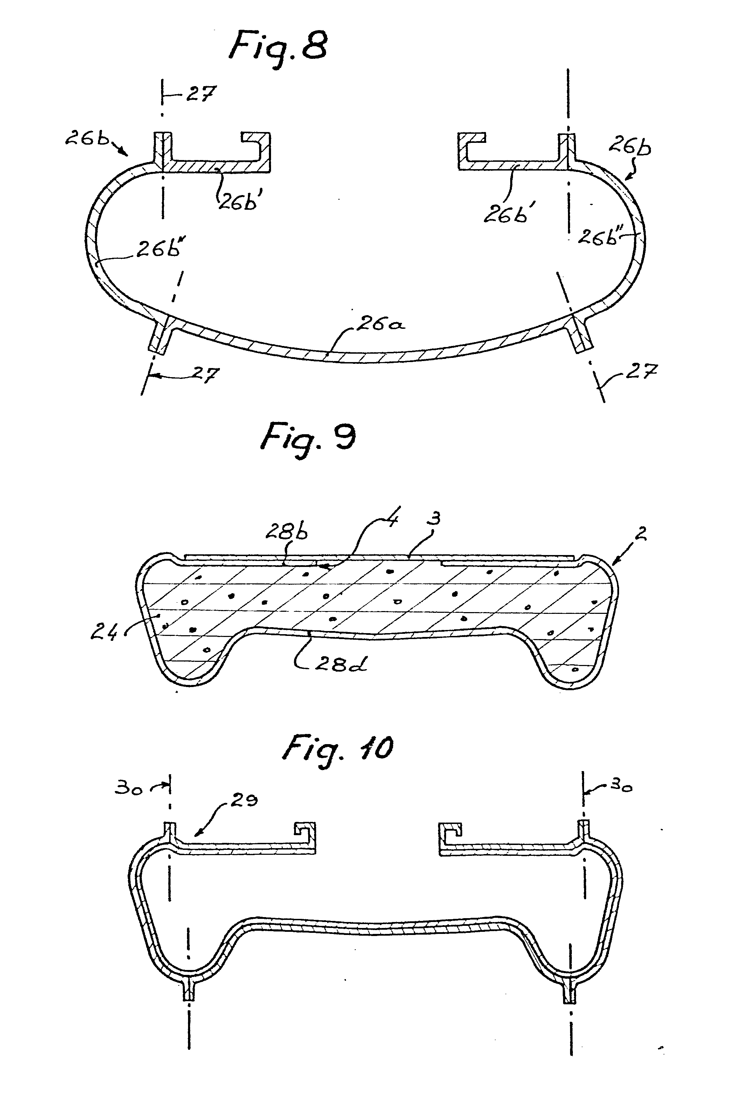

Comme montré à la figure 8,le moule conformateur peut être en plus de deux parties,et par exemple en trois parties 26a,26b,les parties 26b pouvant elles-mêmes être décomposées en deux parties 26b',26b" ,si cela est nécessaire pour le démoulage,pourvu que les plans de joints 27 de cex parties ne soient pas sur la zone du moule correspondant aux flancs de la coque.

La figure 9 montre que la coque 28 peut présenter,en section transversale,la forme d'un C dont la partie cen-

9

trale est déformée vers l'intérieur en 28d sans que l'on sorte du cadre de l'invention.De même,les retours 28b peuvent s'étendre davantage l'un vers l'autre,par exemple pour améliorer la résistance du pont,pourvu qu'ils ne soient pas jointifs et délimitent une ouverture 4. Dans ces conditions,et comme montré figure 10,le moule conformateur 29 est composé de cinq parties dont les plans de joints 30 sont également hors des zones correspondant aux flancs de la coque.

Enfin,dans ce qui précède,l'élément principal ayant une section en C constitue l'élément inférieur de la coque,car cela permet d'utiliser les assemblages des deux éléments pour augmenter la résistance du pont,mais dans des variantes de réalisation,l'élément principal peut être l'élément supérieur,l'élément inférieur étant alors constitué par le panneau obturant son ouverture .

Bien entendu,l'invention ne se limite pas aux coques pour planche à voile,mais s'applique également à toutes les coques et flotteurs pour engins nautiques ou autres.

10

## -REVENDICATIONS-

1-Coque stratifiée ,du type composé de deux éléments, respectivement supérieur et inférieur ,réalisés séparément en résine thermodurcissable armée ,liés l'un à l'autre par collage de leurs bords et formant une cavité garnie par de la résine expansée,caractérisée en ce que l'élément principal de cette coque présente,en section transversale,la forme générale d'un C couché dont les deux retours,disposés au-dessus du dos du C constituant l'une des parois transversales de la coque,sont sensiblement dans le prolongement l'un de l'autre,forment à eux seuls les flancs de la coque et délimitent une ouverture,tandis que l'autre élément,affectant la forme d'un panneau,obture l'ouverture de l'élément principal au bord de laquelle il est lié.

2-Coque selon la revendication 1,caractérisée en ce que le panneau a des dimensions supérieures à celles de l'ouverture de l'élément principal et recouvre par ses bords ceux de ladite ouverture.

3-Coque selon l'une quelconque des revendications 1 et 2,caractérisée en ce que le bord de l'ouverture de l'élément principal comporte une feuillure qui,formant une dépression à l'intérieur de cet élément,reçoit le bord du panneau.

4-Procédé de fabrication de la coque selon l'une quelconque des revendications 1 à 3,du type consistant à réaliser au moins un élément par dépôt d'un complexe fibres de verre-résine dans un moule,et après polymérisation la résine armée,à injecter dans l'élément une résine synthétique mélangée à un agent porophore,caractérisé en ce que le complexe fibres de verre-résine,utile à la réalisation de l'élément principal à sa forme définitive ,est disposé dans un moule en au moins deux parties qui est différent du conformateur dans lequel la coque obtenue est disposée pour recevoir la résine synthétique mélangée à un agent porophore.

5-Moule pour la mise en oeuvre du procédé selon la revendication 4,caractérisé en ce que les plans de joints de ses parties sont ménagés hors des zones correspondant aux flancs de la coque et chacune de ses parties,réalisée en résine armée,comporte sur ses bords des nervures de rigidification munies de moyens de positionnement,coopérant avec ceux complémentaires de la nervure de la partie juxtaposée,et des passages transversaux pour des organes amovibles assurant la liaison des diverses parties,les nervures des parties délimitant l'ouverture étant elles-mêmes renforcées par coudage vers l'extérieur.

6-Moule selon la revendication 5,caractérisé en ce qu'il est en deux parties,réalisées en résine armée et assemblées suivant un plan de joint confondu avec le plan médian vertical de la coque.

Fig.1

4

3

2

2b

2b

2c

2a

Fig.2

3a

3

4

2b

2b

Fig.3

5

2b

4

2b

Fig.4

6a

12

10

6b

9

8

7

13

16

0017603

## Fig.5

7    7
14    15
13

## Fig.6

6a    12
10
2b    18
2c
2
2a
6b
17
13

## Fig.7

10    22    23    12
6a    6b
25
2    24    13    17

**Fig. 8**

**Fig. 9**

**Fig. 10**

0017603

Office européen
des brevets

**RAPPORT DE RECHERCHE EUROPEENNE**

Numéro de la demande

EP 80 42 0039

## DOCUMENTS CONSIDERES COMME PERTINENTS

| Catégorie | Citation du document avec indication, en cas de besoin, des parties pertinentes | Revendication concernée |
|---|---|---|
| | GB - A - 1 142 078 (BLOHM & VOSS)<br>* En entier *<br><br>-- | 1,2,4 |
| | FR - A - 1 215 640 (ETABLISSEMENTS BAUDOU)<br>* En entier *<br><br>-- | 1 |
| | US - A - 4 131 962 (VERNON)<br>* En entier *<br><br>-- | 3 |
| | FR - A - 2 226 267 (COAST CATA-MARAN CORP.)<br>* En entier *<br><br>---- | 4-6 |

**CLASSEMENT DE LA DEMANDE (Int. Cl. ⁴)**

B 63 B  5/24
A 63 C  15/00

**DOMAINES TECHNIQUES RECHERCHES (Int. Cl. ³)**

B 63 B
A 63 C

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interference
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 17-07-1980 | DE SCHEPPER |

OEB Form 1503.1   06.78